# EUROPÄISCHE PATENTSCHRIFT

(11) **EP 1 097 335 B1**
(45) Veröffentlichungstag und Bekanntmachung des Hinweises auf die Patenterteilung: **27.02.2002**
(21) Anmeldenummer: 99929226.1
(22) Anmeldetag: 16.06.1999
(51) Int. Cl.: F16L 59/02, B32B 5/22, D04H 1/70

(54) **VERFAHREN ZUR HERSTELLUNG VON ROHRISOLIERUNGSELEMENTEN UND ROHRISOLIERUNGSELEMENT**
METHOD FOR PRODUCING PIPE INSULATION ELEMENTS AND PIPE INSULATION ELEMENT
PROCEDE DE PRODUCTION D'ELEMENTS D'ISOLATION DE TUYAUX ET ELEMENT D'ISOLATION DE TUYAUX

(30) Priorität: 15.07.1998 DE 19831752
(43) Veröffentlichungstag der Anmeldung: 09.05.2001
(73) Patentinhaber: Deutsche Rockwool Mineralwoll GmbH & Co. OHG, 45966 Gladbeck (DE)
(72) Erfinder: SCHWARK, Martin, D-46242 Bottrop (DE)
(74) Vertreter: Wanischeck-Bergmann, Axel
(86) Internationale Anmeldenummer: EP9904142
(87) Internationale Veröffentlichungsnummer: WO0004320

(56) Entgegenhaltungen:
- WO-A-94/16162
- WO-A-97/01006
- US-A- 5 427 849

## Beschreibung

Die Erfindung betrifft ein Verfahren zur Herstellung von Rohrisolierungselementen, insbesondere Rohrschalen aus Mineralfasern, wobei die Mineralfasern in üblicher Weise in einem Mineralwollevlies angeordnet werden, welches ein Primärvlies bildet. Weiterhin betrifft die Erfindung ein Rohrisolierungselement aus Mineralfasern, bestehend aus einem Mineralwollevlies. Schließlich betrifft die Erfindung eine Vorrichtung zur Herstellung von Mineralwollevliesen aus Mineralfasem, insbesondere für Rohrisolierungselemente.

Aus dem Stand der Technik sind Rohrisolierungselemente, nämlich Mineralwolle-Rohrschalen mit einer gleichbleibenden Rohdichteverteilung über den gesamten Querschnitt bekannt. Sie werden zur Wärme-, Kälte- und / oder Schalldämmung sowie als Brandschutzbekleidung bei Rohrleitungen verwendet. Derartige Rohrisolierungselemente bestehen beispielsweise aus zwei im Querschnitt halbkreisförmig ausgebildeten Abschnitten, die zusammengefügt in ihrem Hohlmittelbereich ein Rohr aufnehmen. Es sind aber auch andere Rohrisolierungselemente bekannt, nämlich solche, die einteilig ausgebildet sind oder aus einer Vielzahl von kreisbogenabschnittförmig ausgebildeten Elementen bestehen.

Die Isolierung von Rohrleitungen erfolgt insbesondere in der Haustechnik. Rohrleitungen in der Haustechnik wurden in der Vergangenheit insbesondere aus verzinkten Stahlrohren oder Kupferrohren hergestellt. Zwischenzeitlich hat sich die Verwendung von Kunststoffleitungen bzw. -rohren und Leitungen aus nicht rostendem Stahl als besonders vorteilhaft erwiesen, wobei die Kupferleitungen einen Anteil von 50%, die Kunststoffleitungen einen Anteil von 35%, die Leitungen aus verzinktem Stahl einen Anteil von 9% und die Leitungen aus nicht rostendem Stahl einen Anteil von 6% ausmachen. Dabei werden Rohrleitungen mit unterschiedlichem Außendurchmesser verwendet. Um derartige Rohrleitungen in kurzer Zeit isolieren zu können, müssen die in der Hausinstallation tätige Handwerksunternehmen eine Vielzahl von Rohrisolierungselementen vorhalten. Diese Rohrisolierungselemente müssen sowohl hinsichtlich der unterschiedlichen Rohraußendurchmesser aber auch hinsichtlich der unterschiedlichen Grundmaterialien der Rohrleitungen vorgesehen sein. Demzufolge resultiert hieraus eine umfangreiche Lagerhaltung mit den erforderlichen Lagerflächen sowohl im Bereich der verarbeitenden Betriebe des Handels, als auch im Bereich der die Rohrisolierungselemente herstellenden Unternehmen.

Bei der Verarbeitung der hier in Rede stehenden Rohrisolierungselemente kommt es zum einen darauf an, daß sich die Rohrisolierungselemente möglichst großflächig an die zu isolierenden Rohrleitungen anlegen, so daß Zwischenräume zwischen den Rohrisolierungselementen und der Rohrleitung vermieden werden. Andererseits ist darauf zu achten, daß die Rohrisolierungselemente ausreichend fest an der Rohrleitung befestigt werden. Zu diesem Zweck weisen eine Vielzahl von Rohrisolierungselementen eine Kaschierung auf, welche werksseitig eine selbstklebende Überlappung haben. Bei der Verarbeitung wird die Schutzfolie von der Klebefläche entfernt und die selbstklebende Überlappung wird auf die Rohrschalenaussenseite mit der Kaschierung verklebt. Ergänzend hierzu, wie auch bei nicht kaschierten Rohrleitungselementen wird ein Wickeldraht verwendet, der außenseitig an den Rohrisolierungselementen verspannt wird.

Ausgehend von diesem Stand der Technik liegt der Erfindung die **Aufgabe** zugrunde, ein gattungsgemäßes Verfahren zu schaffen, mit dem universell verwendbare Rohrisolierungselemente in einfacher und kostengünstiger Weise herstellbar sind, so daß der wesentliche Anteil der in der Haustechnik eingesetzten Rohrleitungen mit einer geringen Anzahl von abgestimmten Rohrisolierungselementen gedämmt werden kann.

Zur **Lösung** dieser Aufgabenstellung ist vorgesehen, daß das Primärvlies in einem Teilbereich zur Bildung eines Sekundärvlieses komprimiert wird, so daß der komprimierte Bereich des Primärvlieses zumindest an einer Längsseite des Minerafwollevlieses einen nicht komprimierten Bereich aufweist, das Sekundärvlies anschließend wellenartig aufgefaltet und in dieser Stellung ausgehärtet wird, bevor das Sekundärvlies in seiner parallel zu den großen Oberflächen verlaufenden Mittelebene aufgeschnitten wird, und wobei die Oberflächen der derart gebildeten Rohrhalbschalen spanabehend bearbeitet werden, um eine außenliegende Schicht mit einer aufgrund ihrer Rohdichte höheren Härte als eine innenliegende Schicht zu erzielen.

Nach diesem Verfahren ist somit vorgesehen, daß beispielsweise das an einem Linienende abgezogene Primärvlies in seinem Mittelbereich komprimiert wird, so daß der komprimierte Bereich von zwei nicht komprimierten Bereichen entlang der Längsseiten des Primärvlieses flankiert ist. Anschließend wird das Primärvlies derart wellenartig aufgefaltet, daß ein sinusförmig aufgestelltes Vormaterial zur Herstellung von Rohrisolierungselementen entsteht, welches einen dreischichtigen Aufbau hat, wobei die mittlere Schicht der komprimierte Bereich des Primärvlieses ist. Durch die Erhöhung der Rohdichte ist dieser Vliesbereich härter ausgebildet als die beiden außenseitig des Vlieses angeordneten Schichten, die gegenüber der Mittelschicht eine geringere Rohdichte und somit Härte aufweist. Schließlich ist nach dem erfindungsgemäßen Verfahren vorgesehen, daß nach dem Aushärten des Sekundärvlieses in seiner sinusförmigen Anordnung das Sekundärvlies aufgeschnitten wird, so daß nach einer spanabhebenden Bearbeitung Rohrhalbschalen entstehen, deren äußere Schicht eine höhere Rohdichte als deren innenliegende Schicht aufweisen. Hierbei ist es letztendlich zumindest erforderlich, die außenliegende Schicht mit geringerer Rohdichte soweit abzuschleifen, daß die mittlere Schicht mit der höheren Rohdichte nach Abschluß der spanabhebenden Arbeiten die Außenfläche der Rohrschale bildet, wobei gleichzeitig die innenliegende Schicht mit geringer Rohrdichte ausgekehlt wird, um einen Hohlraum zur Aufnahme eines Rohres zu bilden.

Alternativ zu dieser Vorgehensweise kann vorgesehen sein, daß das Primärvlies in einer bestimmten Länge abgelängt und der abgelängte Abschnitt des Primärvlieses in einem Teilbereich komprimiert wird, bevor das Primärvlies mit seinem nicht komprimierten Teilbereich voran einem Wickelkern zugeführt wird, wobei die Länge des nicht komprimierten Teilbereiches zumindest dem Umfang des Wickelkerns entspricht, und daß das Bindemittel anschließend ausgehärtet und das Mineralwollevlies an zumindest einer Seite zum Hohlraum oder Wickelkern hin aufgeschnitten wird.

Bei dieser alternativen Lösung der erfindungsgemäßen Aufgabe ist somit ein gattungsgemäßes Verfahren vorgesehen, bei dem ein Abschnitt eines Mineralwollevlieses auf einen Wickelkern gewickelt wird. Dieser Abschnitt des Mineralwollevlieses besteht aus einem nicht komprimierten Teilbereich und einem sich daran anschließenden komprimierten Teilbereich, wobei der nicht komprimierte Teilbereich zuerst auf den Wickelkern gewickelt wird und eine Länge aufweist, die zumindest mit der Umfangsfläche des Wickelkerns übereinstimmt. Es besteht aber auch die Möglichkeit, daß der nicht komprimierte Teilbereich des Abschnittes des Mineralwollevlieses eine Länge aufweist, die einen vielfachen oder Bruchteilen davon des Außenumfanges des Wickelkerns entspricht.

Nach einem weiteren Merkmal der Erfindung ist vorgesehen, daß der zu komprimierende Bereich des Mineralvlieses um 10 bis 50% der ursprünglichen Rohdichte komprimiert wird. Dieser Grad der Kompression reicht aus, um ein Rohrisolierungselement aus Mineralfasem zu schaffen, bei dem die Außenfläche ausreichend starr ausgebildet ist, um einen nachträglich aufzubringenden Wickeldraht oder dergleichen ohne Beeinflussung der Wärmedämmeigenschaften zu tragen. Insbesondere wird mit einer Kompression eine formstabile Oberfläche bei einem Rohrisolierungselement erzielt.

Das Primärvlies wird mittels zumindest zweier, gegenüberliegend angeordneter Walzen in seinem mittleren Bereich komprimiert. Hierbei hat es sich als vorteilhaft erwiesen, die Umlaufgeschwindigkeit der Walzen auf die Fördergeschwindigkeit der Primärvliestransporteinrichtung dahingehend abzustimmen, daß die Umfangsgeschwindigkeit mit der Fördergeschwindigkeit übereinstimmt.

Das Sekundärvlies wird durch eine definierte Auf- und Abbewegung zumindest eines Förderbandes kontinuierlich mäandrierend abgelegt und mit definierter Fördergeschwindigkeit weiter gefördert. Die Dicke der komprimierten und nicht komprimierten Schichten ist hierbei abhängig von den zu produzierenden Rohrschalen.

Bei der alternativen Ausgestaltung des erfindungsgemäßen Verfahrens kann darüberhinaus in vorteilhafter Weise vorgesehen werden, daß das Primärvlies dem Wickelkern mit einer Fördergeschwindigkeit zugeführt wird, die mit der Umfangsgeschwindigkeit des Wickelkerns übereinstimmt, so daß ein Komprimieren des nicht komprimierten Primärvlieses aufgrund der Wickelzugkräfte vermieden wird.

Mit dem voranstehend erläuterten Verfahren können erfindungsgemäße Rohrisolierungselemente aus Mineralfasern, bestehend aus einem Mineralwollevlies, hergestellt werden, welche zumindest zwei Schichten aufweisen, von denen eine innenliegende Schicht eine gegenüber einer außenliegende Schicht geringere Rohdichte und somit Härte aufweist. Vorzugsweise ist bei derartigen Rohrisolierungselementen eine außenseitig angeordnete Kaschierung vorgesehen, welche aus einer Kunststoff- oder Metallfolie besteht.

Weiterhin ist bei dem erfindungsgemäßen Rohrisolierungselement vorgesehen, daß die außenliegende Schicht eine um 50 bis 100% höhere Rohdichte als die innenliegende Schicht aufweist.

Eine Weiterbildung des erfindungsgemäßen Rohrisolierungselementes sieht vor, daß dieses zweiteilig ausgebildet ist und somit zwei, im Querschnitt im wesentlichen halbkreisförmige Schalenabschnitte aufweist. Die Verbindung dieser Schalenabschnitte erfolgt im Bereich zumindest eines Schenkels durch einen Klebestreifen, der auf einer Schenkelfläche angeordnet ist und die Schenkelfläche der einen Schalenhälfte mit der Schenkelfläche der zweiten Schalenhälfte verbindet. Vorzugsweise wird hierzu ein zweiseitiges Klebeband verwendet, wobei aber auch eine Verklebung mittels Heißleim Anwendung finden kann. Selbstverständlich besteht die Möglichkeit beide Schenkel der Schalenhälften mit einem derartigen Klebeband auszubilden, so daß eine einfache Montage des Rohrisolierungselementes gegeben ist. Die Verklebung kann voll- oder teilflächig erfolgen.

Zur Herstellung von Mineralwollevliesen aus Mineralfasern, insbesondere für Rohrisolierungselemente wird eine Vorrichtung vorgeschlagen, die eine Fördereinrichtung zum Transport eines Sekundärvlieses und einen Pendelförderer aufweist, mit dem ein aus Mineralfasern und Bindemitteln gebildetes Primärvlies mäandrierend auf der Fördereinrichtung ablegbar ist, wobei der Pendelförderer aus zwei parallel zueinander ausgerichteten Förderbändern besteht, zwischen denen das Primärvlies gefördert wird. Um das Mineralwollevlies, insbesondere das Primärvlies derart auszubilden, daß es in einem in seiner Längsrichtungen verlaufenden Bereich komprimiert ist, ist vorgesehen, daß der Pendelförderer ein verdichtendes Förderelement aufweist. Das Primärvlies wird somit nicht nur dem Pendelförderer, sondern auch einem weiteren Förderelement zugeführt, welches das Primärvlies in einem in seiner Längsrichtung verlaufenden Bereich komprimiert.

Vorzugsweise ist das verdichtende Förderelement als Bombierung zumindest eines, bevorzugt beider Förderbänder des Pendelförderers ausgebildet. Demzufolge sind bei den Förderbändern des Pendelförderers Materialverdickungen vorgesehen, die komprimierend auf das Primärvlies einwirken.

Alternativ kann vorgesehen sein, daß das verdichtende Förderelement den Förderbändern des Pendelförderers nachgeschaltet ist und somit ein eigenständiges Konstruktionselement bildet. Hierbei hat es sich als vorteilhaft erwiesen, daß ein derartiges verdichtendes Förderelement in einfacher Weise in bereits bestehende Produktionsanlagen integriert werden kann.

Das nachgeschaltete verdichtende Förderelement kann beispielsweise als zweites Paar Förderbänder des Pendelförderers ausgebildet sein, von denen zumindest ein Förderband eine Bombierung aufweist. Auch hier hat es sich aber als vorteilhaft erwiesen, beide Förderbänder des nachgeschalteten verdichtenden Förderelementes mit einer Bombierung, d.h. einer Materialverdikkung auszubilden, so daß ein gleichmäßiger Kompressionsdruck auf beide großen Oberflächen des Primärvlieses ausgeübt wird.

Vorzugsweise ist das nachgeschaltete verdichtende Förderelement ausschwenkbar im Förderweg angeordnet, so daß auf dieser Fertigungsstraße nicht nur erfindungsgemäße Mineralwollevliese mit komprimierten Teilbereichen, sondern auch solche Mineralwollevliese ohne komprimierte Teilbereiche hergestellt werden können.

Alternativ zu dem zweiten Paar Förderbänder kann vorgesehen sein, daß das verdichtende Förderelement als Walzenpaar ausgebildet ist, welches zwei Walzen aufweist, die jeweils unter- und/oder oberhalb eines Förderbandes des Pendelförderers angeordnet sind und einen Walzenabschnitt aufweisen, dessen Durchmesser größer ist, als der Abstand der Förderbandabschnitte eines Förderbandes des Pendelförderers. Die Walzenabschnitte des Walzenpaares wirken somit ebenfalls verdichtend auf das Primärvlies ein, da ihre Mantelflächen in den Förderweg des Primärvlieses derart hervorstehen, daß ihr Abstand zueinander geringer ist, als der Abstand der zueinander benachbart angeordneten Förderbänder des Pendelförderers.

Die Walzen können ebenfalls derart angeordnet sein, daß sie aus dem Förderweg herausgeschwenkt werden können, um entsprechend den voranstehenden Ausführungen auch Mineralwollevliese herstellen zu können, die keine Komprimierung aufweisen.

Nach einem weiteren Merkmal der Erfindung ist vorgesehen, daß jede Walze mehrere Walzenabschnitte aufweist, die auf einer Achse angeordnet sind. Vorzugsweise sind die Walzenabschnitte formschlüssig miteinander verbunden, sowie auswechselbar auf der Achse angeordnet. Derart ausgebildet können die Walzen sowohl bei Verschleiß als auch zur Konfiguration unterschiedlicher Kompressionsbreiten und -tiefen an den jeweilig gewünschten Anwendungsfall angepaßt werden. Hierzu werden die Walzenabschnitte von den Achsen demontiert und entsprechend konfiguriert, so daß beispielsweise Walzenabschnitte mit größerer oder kleinerer Breite eingesetzt werden können, die entsprechend breite Kompressionsstreifen im Mineralwolievlies ausbilden.

Schließlich ist nach einem weiteren Merkmal der Erfindung vorgesehen, daß das verdichtende Förderelement mit einer mit der Fördergeschwindigkeit des Pendelförderers übereinstimmenden Geschwindigkeit angetrieben ist. Diese Ausgestaltung verhindert Zugspannungen innerhalb des geförderten Mineralwollevlieses im Bereich des Förderweges zwischen dem Pendelförderer und der Fördereinrichtung zum Transport des Sekundärvlieses.

Weitere Merkmale und Vorteile des erfindungsgemäßen Verfahrens bzw. des erfindungsgemäßen Rohrisolierungselementes ergeben sich aus der nachfolgenden Beschreibung der zugehörigen Zeichnung.

In der Zeichnung zeigen:
- Figur 1: ein Rohrisolierungselement in Ansicht;
- Figur 2: eine Pendeleinrichtung mit einem im Mittelbereich teilweise komprimierten Primärvlies;
- Figur 3: das Primärvlies gemäß der Figur 2 vor einem sinusförmigen Auffalten;
- Figur 4: das sinusförmig aufgefaltete Primärvlies gemäß Figur 3;
- Figur 5: das Primärvlies gemäß Figur 4 mit einer Schnittlinie;
- Figur 6: zwei voneinander getrennte Rohrisolierungselementrohkörper;
- Figur 7: das in einer Schleifeinrichtung eingespannte Rohrisolierungselement gemäß Figur 6;
- Figur 8: eine schematische Darstellung einer zweiten Einrichtung zur Herstellung von Rohrisolierungselementen.
- Figur 9: einen Abschnitt einer ersten Ausführungsform zur Herstellung eines Mineralwollevlieses und
- Figur 10: einen Abschnitt einer zweiten Ausführungsform einer Vorrichtung zur Herstellung eines Mineralwollevlieses.

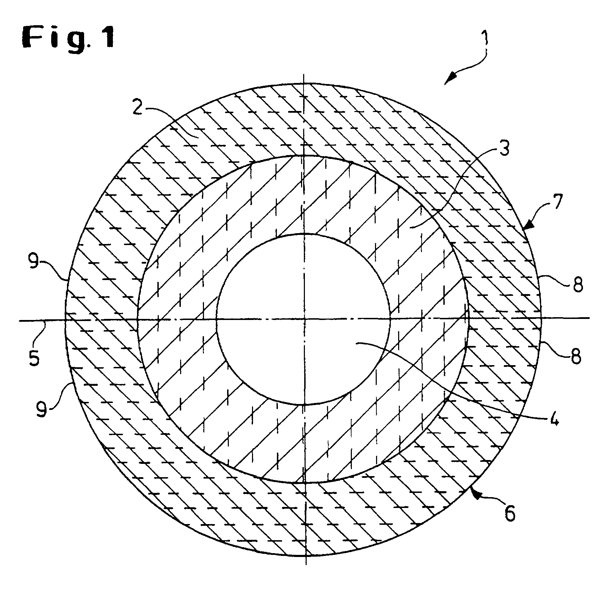

In der Figur 1 ist ein Rohrisolierungselement 1 dargestellt. Das Rohrisolierungselement 1 besteht aus einer Außenschicht 2 und einer Innenschicht 3, die an einen Hohlraum 4 zur Aufnahme eines nicht näher dargestellten Rohres angrenzt. Die Außenschicht 2 hat gegenüber der Innenschicht 3 eine höhere Rohdichte und somit Härte. Das Rohrisolierungselement 1 kann entlang der Linie 5 in zwei Hälften geteilt sein, wobei jede Hälfte 6, 7 zwei Schenkel 8, 9 aufweist, die jeweils eine Schenkelfläche haben, auf der ein nicht näher dargestellter Klebestreifen zur Verbindung der beiden Hälften 6, 7 des Rohrisolierungselementes 1 angeordnet ist.

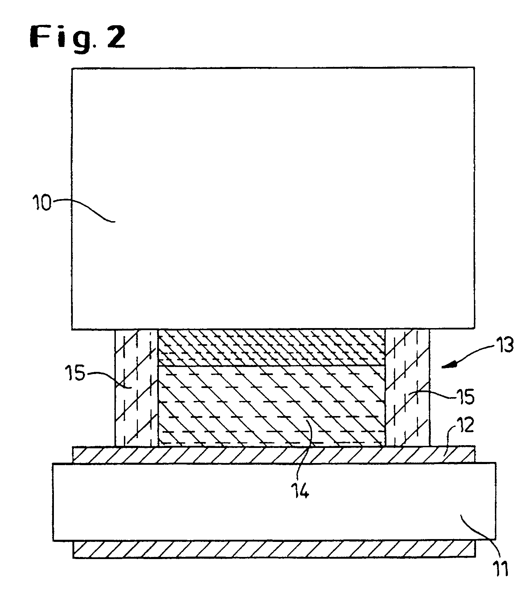

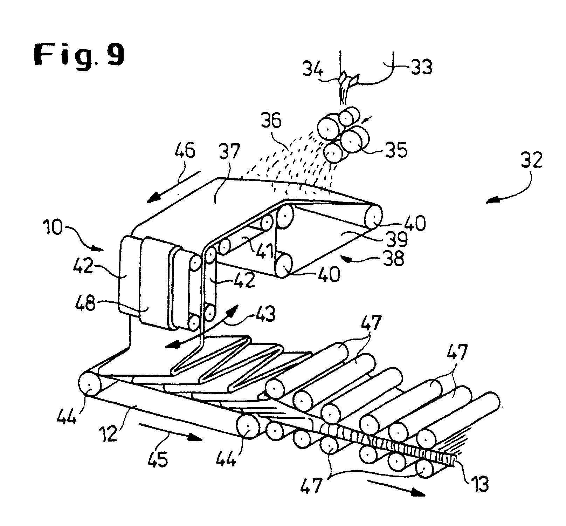

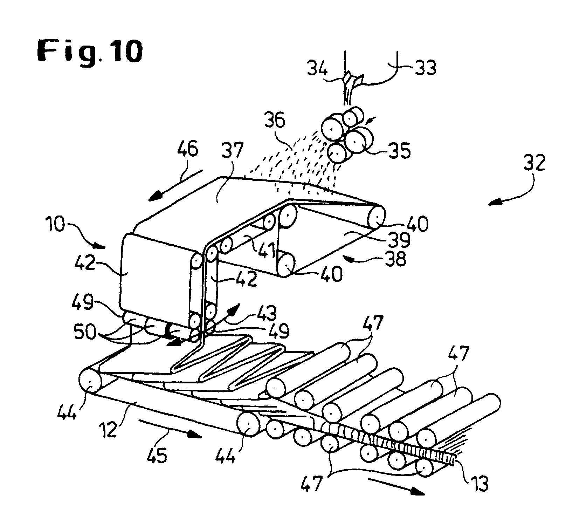

Figur 2 zeigt die generelle Anordnung eines Pendelförderers 10 oberhalb einer Fördereinrichtung 11 mit einem Förderband 12. Die genaue Ausgestaltung dieses Abschnittes einer Vorrichtung zur Herstellung von Mineralwollevliesen wird nachfolgend noch anhand der Figuren 9 und 10 erläutert.

In Figur 2 ist ein Mineralwollevlies 13 zu erkennen, welches auf dem Förderband 12 abgelegt wird. Das Mineralwollevlies 13 weist einen komprimierten Abschnitt 14 in seinem Mittelbereich auf. Seitlich des komprimierten Abschnitts 14 sind zwei unkomprimierte Abschnitte 15 angeordnet.

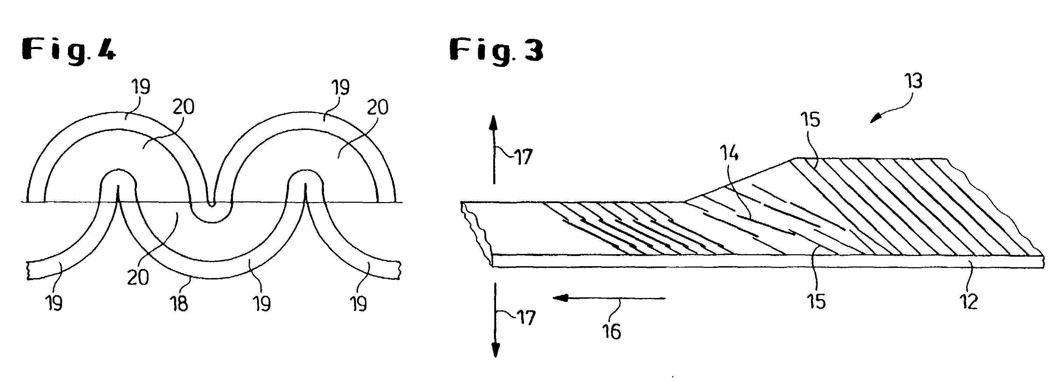

Eine Seitenansicht des Mineralwollevlieses 13 auf dem Förderband 12 ergibt sich aus Figur 3, wobei der Pfeil 16 die Förderrichtung und die Pfeile 17 eine kontinuierliche definierte Auf- und Abbewegung des Mineralwollevlieses im Förderweg anzeigen.

Bei dem Mineratwollevlies 13 gemäß Figur 3 sind die unkomprimierten Abschnitte 15 durch eine dünne Linie und die komprimierten Abschnitte 14 durch eine dickere Linie dargestellt. Die voranstehend beschriebene Anordnung des Mineralwollevlieses 13 mit der damit verbundenen Förderung in Richtung des Pfeiles 16 sowie der definierten Auf- und Abbewegung in Richtung der Pfeile 17 führt zu einem Vormaterial 18 gemäß Figur 4. Das Vormaterial 18 weist zwei unterschiedliche Rohdichten auf, wobei die Rohdichte im Bereich 20 des Vormaterials 18 größer ist, als im Bereich 19 des Vormaterials 18.

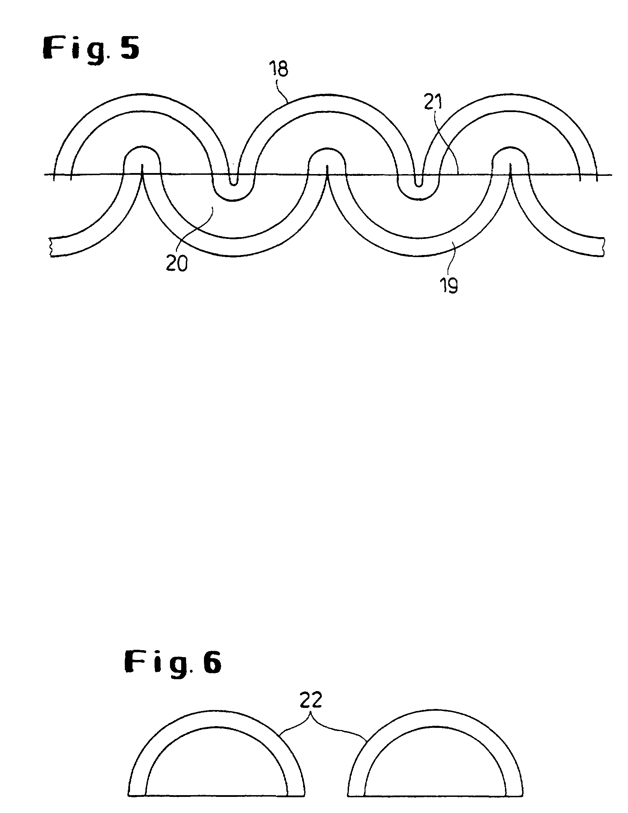

In der Figur 5 ist das Vormaterial 18 nochmals dargestellt, wobei mit der Bezugsziffer 21 eine Schnittlinie angegeben ist, entlang welcher das Vormaterial in Halbschalen-Rohlinge 22 aufgeteilt wird, welche in Figur 6 in einer Seitenansicht dargestellt sind.

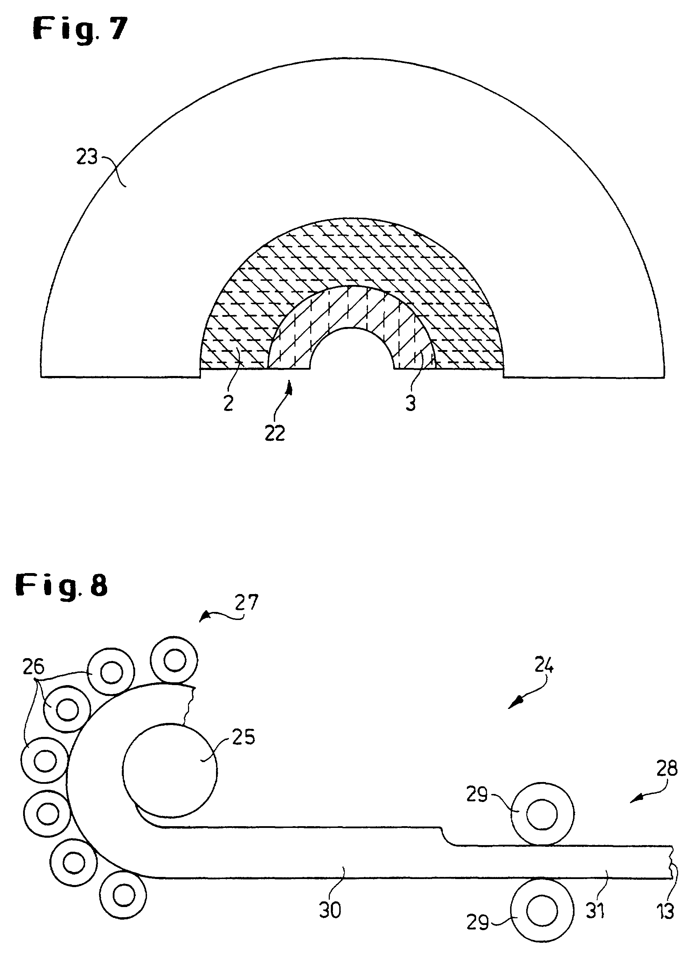

In Figur 7 ist eine weitere Bearbeitungsstation zur Herstellung von Rohrisolierungselementen 1 dargestellt. Hierbei handelt es sich um eine Schleifeinrichtung mit einem Außenkonturfräser 23, der den Halbschalenrohling 22 an seiner Außenfläche soweit abschleift, bis die Außenschicht 2 oberhalb der Innenschicht 3 außenliegend angeordnet ist. Es entsteht dann ein Rohrisolierungselement 1 mit den gewünschten Eigenschaften, nämlich einer harten Außenschicht, die zur Aufnahme von größeren Kräften des Wickeldrahtes geeignet ist und einer weichen Innenschicht 3, die sich aufgrund ihrer geringen Härte in besonders vorteilhafter Weise an die Außenkontur des zu isolierenden Rohres anpaßt.

In Figur 8 ist eine schematische Darstellung einer zweiten Einrichtung 24 zur Herstellung von Rohrisolierungselementen 1 veranschaulicht. Diese Einrichtung 24 weist einen Wickelkern 25 auf, zu dessen Umfangsfläche beabstandet eine Vielzahl von Führungswalzen 26 angeordnet sind. Der Wickelkern 25 und die Führungswalzen 26 bilden eine Wickeleinrichtung 27. Der Wickeleinrichtung 27 vorgeschaltet ist eine Komprimierungsstufe 28, die aus zwei beabstandet zueinander angeordneten Komprimierungswalzen 29 besteht. Die Komprimierungswalzen 29 sind in ihrem Abstand zueinander einstellbar, so daß das Mineralwollevlies 13 in einem Abschnitt 30 unkomprimiert und in einem Abschnitt 31 komprimiert werden kann.

Das Mineralwollevlies 13 wird der Wickeleinrichtung 27 zugeführt, wobei der nicht komprimierte Abschnitt 30 auf den Wickelkern 25 aufgewickelt wird. Anschließend wird der komprimierte Abschnitt 31 der Wickeleinrichtung 27 zugeführt, so daß insgesamt ein Rohrisolierungselement 1 entsteht, das die nicht komprimierte Innenschicht 3 und die komprimierte Außenschicht 2 aufweist.

In den Figuren 9 und 10 sind Abschnitte einer an sich bekannten Vorrichtung 32 zur Herstellung eines Mineralwollevlieses 13 dargestellt. Die Vorrichtung 32 weist einen Schmelzofen 33 auf, aus dem über einen Ausguß 34 geschmolzenes Gestein einem Zerfaserungsgerät 35 zugeführt wird. Das Zerfaserungsgerät 35 zerfasert die abgezogene Schmelze in einen Faserstrom 36, welcher Fasern aufweist, die als Primärvlies 37 auf einer Fördereinrichtung 38 abgelegt werden. Die Fördereinrichtung 38 weist ein erstes Förderband 39 auf, welches über drei Umlenkrollen 40 umläuft. An dieses erste Förderband 39 schließt sich ein Horizontalförderband 41 an, welches das Primärvlies 37 dem Pendelförderer 10 zuführt. Der Pendelförderer 10 weist zwei im Abstand zueinander und parallel zueinander angeordnete kurze Förderbänder 42 auf, welche in Richtung der Pfeile 43 pendelnd bewegt werden. Die Förderbänder 42 des Pendelförderers 10 sind derart angeordnet und ausgerichtet, daß das von dem Horizontalförderband 41 geförderte Primärvlies lotrecht dem Förderband 12 zugeführt wird, welches ebenfalls über Umlenkrollen 44 läuft. Hierbei ist die mit dem Pfeil 45 angedeutete Förderrichtung des Förderbandes 12 rechtwinklig zur Förderrichtung des Horizontalförderbandes 41 und rechtwinklig zur Förderrichtung der Förderbänder 42 des Pendelförderers 10 ausgerichtet, wobei die Förderrichtung des Förderbandes 12 in einer zur Förderrichtung des Horizontalförderbandes 41 parallelen Ebene erfolgt. Die Förderrichtung des Horizontalförderbandes 41 ist durch den Pfeil 46 angedeutet.

Das Primärvlies 37 wird über den Pendelförderer 10 mäandrierend und rechtwinklig zur Förderrichtung des Förderbandes 12 auf dem Förderband 12 abgelegt, bevor es mittels einer Vielzahl von Walzen 47 vorkomprimiert wird. Das hierdurch entstehende Sekundärvlies kann sodann in den voranstehend beschriebenen Arbeitsweisen zu Rohrisolierungselementen 1 verarbeitet werden. Um eine Komprimierung des Primärvlieses 37 im Bereich des Pendelförderers 10 durchzuführen ist gemäß Figur 9 vorgesehen, daß die Förderbänder 42 in ihrem Mittelbereich eine Bombierung 48 aufweisen. Die Förderbänder 42 weisen somit in ihrem Mittelbereich eine größere Materialstärke auf.

Diese Bombierung 48 führt zu einer Komprimierung des Primärvlieses 37 im Mittelbereich, bevor das Primärvlies 37 als Sekundärvlies auf dem Förderband 12 abgelegt wird.

Eine alternative Ausgestaltung der Vorrichtung 32 ist in Figur 10 dargestellt. Diese Vorrichtung 32 gemäß Figur 10 unterscheidet sich von der Vorrichtung 32 gemäß Figur 9 dadurch, daß den Förderbändern 42 des Pendelförderers 10 Walzen 49 nachgeschaltet sind, die gemeinsam mit den Förderbändern 42 des Pendelförderers 10 entsprechend des Pfeils 43 pendelnd geführt sind. Die Walzen 49 weisen jeweils eine nicht näher dargestellte Achse auf, auf der Walzenabschnitte 50 angeordnet sind, wobei der mittlere Walzenabschnitt 50 einen größeren Durchmesser aufweist, als die beiden, den mittleren Walzenabschnitt 50 flankierenden Walzenabschnitte 50. Die flankierenden Walzenabschnitte 50 haben einen Durchmesser, der im wesentlichen mit dem Durchmesser der Umlenkrollen der Förderbänder 42 zuzüglich der Materialstärke der Förderbänder 42 übereinstimmt.

Die Walzenabschnitte 50 sind formschlüssig miteinander verbunden und werden mit einer Drehgeschwindigkeit angetrieben, die mit der Transportgeschwindigkeit des Förderbandes 42 übereinstimmt, so daß das Primärvlies 37 nicht durch eine in Längsrichtung des Primärvlieses wirkende Kraft gedehnt oder gestaucht wird.

Die Herstellung eines Rohrisolierungselementes erfolgt demzufolge dadurch, daß das Primärvlies 37 im Anschluß an den Pendelförderer 10 mittels der Walzenabschnitte 50 der Walzen 49 in seinem Mittelbereich komprimiert wird. Hierbei wird ein Komprimierungsgrad von 10 bis 50% der ursprünglichen Rohdichte erzielt, wobei die Materialstärke der komprimierten und nicht komprimierten Abschnitte abhängig von den zu produzierenden Rohrisolierungselementen 1 ist. Hierbei spielen Innendurchmesser und Dämmdicke der Rohrisolierungselemente eine besondere Rolle. Das dem Pendelförderer 10 entnommene und teilweise komprimierte Sekundärvlies wird sodann vor einem Härteofen über zwei Transportbänder geführt, die kontinuierlich eine definierte Auf- und Abbewegung ausführen und welche gleichzeitig mit einer definierten Transportgeschwindigkeit das Primärvlies transportieren. Durch die Kombination der Auf- und Abbewegung sowie der Transportbewegung wird das Sekundärvlies sinusförmig aufgestellt. Dieses sinusförmig aufgestellte Sekundärvlies bildet ein Vormaterial, welches eine weiche Oberseite und eine harte Mittelschicht sowie eine weiche Unterseite aufweist. Anschließend wird das derart hergestellte Vormaterial horizontal aufgesägt und die derart entstandenen Halbschalenrohlinge dem Schleif- bzw. Fräsaggregat zugeführt. In dem Schleif- bzw. Fräsaggregat werden die Innen- und Außenkonturen der Halbschalen hergestellt. Bei der Bearbeitung des Außendurchmessers wird so viel Material abgeschliffen, daß der harte Kern als Außenoberfläche der Halbschale vorhanden bleibt.

## Patentansprüche

1. Verfahren zur Herstellung von Rohrisolierungselementen (1), insbesondere Rohrschalen aus Mineralfasern, wobei die Mineralfasem in üblicher Weise in einem Mineralwollevlies (13) angeordnet werden, welches ein Primärvlies (37) bildet, das in einem Teilbereich zur Bildung eines Sekundärvlieses komprimiert wird, so daß der komprimierte Bereich des Primärvlieses (37) zumindest an einer Längsseite des Mineralwollevlieses (13) einen nicht komprimierten Bereich (15) aufweist, das Sekundärvlies anschließend wellenartig aufgefaltet und in dieser Stellung ausgehärtet wird, bevor das Sekundärvlies in seiner parallel zu den großen Oberflächen verlaufenden Mittelebene aufgeschnitten wird, und wobei die Oberflächen der derart gebildeten Rohrhalbschalen spanabhebend bearbeitet werden, um eine außenliegende Schicht (2) mit einer aufgrund ihrer höheren Rohdichte höheren Härte als eine innenliegende Schicht (3) zu erzielen.

2. Verfahren zur Herstellung von Rohrisolierungselementen (1), insbesondere Rohrschalen aus Mineralfasern, wobei die Mineralfasern in üblicher Weise in einem Mineralwollevlies (13) angeordnet werden, welches ein Primärvlies (37) bildet,
**dadurch gekennzeichnet,**
**daß** das Primärvlies (37) in einer bestimmte Länge abgelängt und der abgelängte Abschnitt des Primärvlieses (37) in einem Teilbereich (31) komprimiert wird, bevor das Primärvlies mit seinem nicht komprimierten Teilbereich (30) voran einem Wickelkern (25) zugeführt wird, wobei die Länge des nicht komprimierten Teilbereiches (30) zumindest dem Umfang des Wickelkerns (25) entspricht, und daß das Bindemittel anschließend ausgehärtet und das Mineralwollevlies (13) an zumindest einer Seite zum Hohlraum oder Wickelkern (25) hin aufgeschnitten wird.

3. Verfahren nach einem der Ansprüche 1 oder 2,
**dadurch gekennzeichnet,**
**daß** der zu komprimierende Bereich des Mineralvliese (13) um 10 bis 50% der ursprünglichen Rohdichte komprimiert wird.

4. Verfahren nach Anspruch 1,
**dadurch gekennzeichnet,**
**daß** das Primärvlies (37) mittels zumindest zweier, gegenüberliegend angeordneter Walzen (49) in seinem mittleren Bereich komprimiert wird.

5. Verfahren nach Anspruch 4,
**dadurch gekennzeichnet,**
**daß** die Umfangsgeschwindigkeit der Walzen (49) mit der Fördergeschwindigkeit des mittels einer vorgeschalteten Pendeleinrichtung (10) geförderten Primärvlieses (37) übereinstimmt.

6. Verfahren nach Anspruch 1,
**dadurch gekennzeichnet,**
**daß** das Sekundärvlies durch eine definierte Auf- und Abbewegung zumindest eines Förderbandes kontinuierlich mäandrierend abgelegt und mit definierter Fördergeschwindigkeit weitergeführt wird.

7. Verfahren nach Anspruch 2,
**dadurch gekennzeichnet,**
**daß** das Primärvlies (37) dem Wickelkern (25) mit einer Fördergeschwindigkeit zugeführt wird, die mit der Umfangsgeschwindigkeit des Wickelkerns (25) übereinstimmt.

8. Rohrisolierungselement aus Mineralfasern, bestehend aus einem Mineralwollevlies (13), welches zumindest zwei Schichten aufweist, von denen eine innenliegende Schicht (3) eine gegenüber einer außenliegenden (2) Schicht geringere Rohdichte und somit Härte aufweist.

9. Rohrisolierungselement nach Anspruch 8,
**dadurch gekennzeichnet,**
**daß** auf der außenliegenden Schicht (2) außenseitig eine Kaschierung angeordnet ist.

10. Rohrisolierungselement nach Anspruch 9,
**dadurch gekennzeichnet,**
**daß** die Kaschierung aus einer Kunststoff- oder Metallfolie besteht.

11. Rohrisolierungselement nach Anspruch 8,
**dadurch gekennzeichnet,**
**daß** die außenliegende Schicht (2) eine um 50 bis 100% höhere Rohdichte als die innenliegende Schicht (3) aufweist.

12. Rohrisolierungselement nach Anspruch 8,
**dadurch gekennzeichnet,**
**daß** das Rohrisolierungselement (1) zweiteilig ausgebildet ist und somit aneinanderstoßende Schenkelflächen aufweist, wobei im Bereich zumindest einer Schenkelfläche ein Klebestreifen angeordnet ist.

13. Vorrichtung zur Herstellung von Mineralwollevliesen aus Mineralfasern, insbesondere für Rohrisolierungselemente, welches in einem in seiner Längsrichtung verlaufenden Bereich komprimiert ist, mit einer Fördereinrichtung zum Transport eines Sekundärvlieses und einem Pendelförderer, mit dem ein aus Mineralfasern und Bindemitteln gebildetes Primärvlies mäandrierend auf der Fördereinrichtung ablegbar ist, wobei der Pendelförderer aus zwei parallel zueinander ausgerichteten Förderbändern besteht, zwischen denen das Primärvlies gefördert wird,
**dadurch gekennzeichnet,**
**daß** der Pendelförderer (10) ein verdichtendes Förderlement aufweist.

14. Vorrichtung nach Anspruch 13,
**dadurch gekennzeichnet,**
**daß** das verdichtende Förderelement als Bombierung (48) zumindest eines, bevorzugt beider Förderbänder (42) des Pendelförderers (10) ausgebildet ist.

15. Vorrichtung nach Anspruch 13,
**dadurch gekennzeichnet,**
**daß** das verdichtende Förderelement den Förderbändern (42) des Pendelförderers (10) nachgeschaltet wird.

16. Vorrichtung nach Anspruch 15,
**dadurch gekennzeichnet,**
**daß** das nachgeschaltete verdichtende Förderelement als zweites Paar Förderbänder des Pendelförderers (10) ausgebildet ist und zumindest einseitig eine Bombierung (48) aufweist.

17. Vorrichtung nach Anspruch 16,
**dadurch gekennzeichnet,**
**daß** das nachgeschaltete verdichtende Förderelement ausschwenkbar im Förderweg angeordnet ist.

18. Vorrichtung nach Anspruch 13,
**dadurch gekennzeichnet,**
**daß** das Förderelement als Walzenpaar ausgebildet ist, welches zwei Walzen (49) aufweist, die jeweils unter- und/oder oberhalb des Förderbandes (42) des Pendelförderers (10) angeordnet sind und einen Walzenabschnitt (50) aufweisen, dessen Durchmesser größer ist, als der Abstand der Förderbänder (42) des Pendelförderers (10).

19. Vorrichtung nach Anspruch 18,
**dadurch gekennzeichnet,**
**daß** jede Walze (49) mehrere Walzenabschnitte (50) aufweist, die auf einer Achse angeordnet sind.

20. Vorrichtung nach Anspruch 19,
**dadurch gekennzeichnet,**
**daß** die Walzenabschnitte (50) vorzugsweise formschlüssig miteinander verbunden sind.

21. Vorrichtung nach Anspruch 19,
**dadurch gekennzeichnet,**
**daß** die Walzenabschnitte (50) auswechselbar auf der Achse angeordnet sind.

22. Vorrichtung nach Anspruch 13,
**dadurch gekennzeichnet,**
**daß** das verdichtende Förderelement mit einer mit der Fördergeschwindigkeit des Pendelförderers (10) übereinstimmenden Geschwindigkeit angetrieben ist.

## Claims

1. Method for producing pipe insulation elements (1), in particular pipe shells made of mineral fibres, wherein said mineral fibres are arranged in the usual manner in a fibrous web of mineral wool (13) forming a primary web (37) that is compacted in a partial region for forming a secondary web, so that the compacted region of said primary web (37). includes a non-compacted region (15) at least on one longitudinal side of said fibrous web of mineral wool (13), and thereafter said secondary web is applied by plaiting in a waveform and is cured in this position prior to said secondary web being cut open in its centre plane that extends parallel to the large surfaces, and wherein the surfaces of the pipe half shells thus produced are machined in order to obtain an outer layer (2) having a hardness which owing to its higher bulk density is higher than that of an inner layer (3).

2. Method for producing pipe insulation elements (1), in particular pipe shells made of mineral fibres, wherein said mineral fibres are arranged in the usual manner in a fibrous web of mineral wool (13) that forms a primary web (37),
**characterized in**
**that** said primary web (37) is cut into a predetermined length and that this length of said primary web (37) is compacted in a partial region thereof prior to feeding said primary web with its non-compacted region (30) ahead to a hub (25), wherein the length of the non-compacted partial region (30) at least corresponds to the circumference of said hub (25), and that the bonding agent is subsequently cured and the fibrous web of mineral wool (13) is cut open at least on one side towards the hollow space or the hub (25).

3. Method according to one of the claims 1 or 2,
**characterized in**
**that** the region of the fibrous web of mineral wool (13) which is to be compacted is compacted by 10 to 50% of the original bulk density.

4. Method according to claim 1,
**characterized in**
**that** the primary web (37) is compacted in its middle portion by means of at least two rollers (49) that are arranged vis à vis each other.

5. Method according to claim 4
**characterized in**
**that** the peripheral speed of said rollers (49) corresponds with the conveying speed of the primary web (37) which is conveyed by means of an upstream shuttle means (10).

6. Method according to claim 1,
**characterized in**
**that** the secondary web is continuously plaited in a meandering fashion and is further conveyed at a defined conveying speed, by means of a defined up and down movement of at least one conveyor belt.

7. Method according to claim 2,
**characterized in**
**that** the primary web (37) is fed to the hub (25) at a conveying speed which corresponds with the peripheral speed of said hub (25).

8. Pipe insulation element made of mineral fibres, which element consists of a fibrous web of mineral wool (13) which includes at least two layers, an inner layer (3) of which having a bulk density and hence a hardness which is smaller than that of an outer layer (2).

9. Pipe insulation element according to claim 8,
**characterized in**
**that** a lamination is arranged on the outside of said outer layer (2).

10. Pipe insulation element according to claim 9,
**characterized in**
**that** said lamination consists of a plastic or metal film.

11. Pipe insulation element according to claim 8,
**characterized in**
**that** said outer layer (2) has a bulk density which is 50 to 100% higher than that of the inner layer (3).

12. Pipe insulation element according to claim 8,
**characterized in**
**that** said pipe insulation element (1) is formed as two parts and accordingly has two abutting flange surfaces, with an adhesive tape provided in the region of at least one flange surface.

13. Apparatus for producing webs of mineral wool made of mineral fibres, particularly for pipe insulation elements, which fibrous web of mineral wool is compacted in a region extending in the longitudinal direction thereof, said apparatus comprising a conveying means for conveying a secondary fibrous web and a shuttle conveyor by means of which a primary fibrous web formed of mineral fibres and a bonding agent can be deposited in a meandering fashion on a conveying means, wherein said shuttle conveyor consists of two mutually parallel aligned conveyor belts between which said primary web is conveyed,
**characterized in**
**that** said shuttle conveyor (10) includes a compacting conveyor element.

14. Apparatus according to claim 13,
**characterized in**
**that** said compacting conveyor element is formed as a cambering (48) of at least one conveyor belt and preferably of both conveyor belts (42) of said shuttle conveyor (10).

15. Apparatus according to claim 13,
**characterized in**
**that** said compacting conveyor element is arranged downstream of the conveyor belts (42) of said shuttle conveyor (10).

16. Apparatus according to claim 15,
**characterized in**
**that** said downstream compacting conveyor element is provided in the form of a second pair of conveyor belts of said shuttle conveyor (10) and includes a cambering (48) at least on one side thereof.

17. Apparatus according to claim 16,
**characterized in**
**that** said downstream compacting conveyor element is arranged in the conveying path in such a manner that it can be swung out.

18. Apparatus according to claim 13,
**characterized in**
**that** said conveyor element is formed as a pair of rollers including two rollers (49) which are respectively arranged below and/or above the conveyor belt (42) of the shuttle conveyor (10) and which include a roller section (50) of which the diameter is larger than the distance of the conveyor belts (42) of said shuttle conveyor (10).

19. Apparatus according to claim 18,
**characterized in**
**that** each roller (49) includes several roller sections (50) which are arranged on one axis.

20. Apparatus according to claim 19,
**characterized in**
**that** said roller sections (50) are connected to each other preferably in a form-fit fashion.

21. Apparatus according to claim 19,
**characterized in**
**that** said roller sections (50) are arranged in an exchangeable fashion on said axis.

22. Apparatus according to claim 13,
**characterized in**
**that** said compacting conveyor element is driven at a speed which corresponds with the conveying speed of said shuttle conveyor (10).

## Revendications

1. Procédé de production d'éléments d'isolation de tuyaux (1), en particulier d'enveloppes de tuyaux en fibres minérales, les fibres minérales étant placées de manière habituelle dans un non-tissé en laine minérale (13) qui forme un non-tissé primaire (37) qui est comprimé dans une zone partielle pour former un non-tissé secondaire si bien que la zone comprimée du non-tissé primaire (37) présente, sur un long côté du non-tissé en laine minérale (13), une zone non comprimée (15), le non-tissé secondaire est ensuite plié comme une cannelure et est durci dans cette position avant que le non-tissé secondaire soit ouvert en coupant dans son plan médian parallèlement aux grandes surfaces et les surfaces des demi-enveloppes de tuyau ainsi formées étant usinées par enlèvement de copeaux pour obtenir une couche située à l'extérieur (2) avec une dureté supérieure en raison d'une masse volumique apparente plus élevée qu'une couche située à l'intérieur (3).

2. Procédé de production d'éléments d'isolation de tuyaux (1), en particulier d'enveloppes de tuyaux en fibres minérales, les fibres minérales étant placées de manière habituelle dans un non-tissé en laine minérale (13) qui forme un non-tissé primaire (37),
**caractérisé en ce**
**que** le non-tissé primaire (37) est coupé à longueur à une longueur déterminée et la section coupée à longueur du non-tissé primaire (37) est comprimée dans une zone partielle (31) avant que le non-tissé primaire ne soit amené avec sa zone partielle non comprimée (30) en avant à un noyau d'enroulement (25), la longueur de la zone partielle non comprimée (30) correspondant au moins à la circonférence du noyau d'enroulement (25) et que le liant est ensuite durci et le non-tissé en laine minérale (13) est coupé en ouvrant sur au moins un côté vers l'espace creux ou le noyau d'enroulement (25).

3. Procédé selon l'une des revendications 1 ou 2,
**caractérisé en ce**
**que** la zone à comprimer du non-tissé minéral (13) est comprimée de 10 à 50% de la masse volumique apparente d'origine.

4. Procédé selon la revendication 1,
**caractérisé en ce**
**que** le non-tissé primaire (37) est comprimé dans sa zone du milieu au moyen d'au moins deux rouleaux (49) placés en étant opposés.

5. Procédé selon la revendication 4,
**caractérisé en ce**
**que** la vitesse circonférentielle des rouleaux (49) coïncide avec la vitesse de transport du non-tissé primaire (37) transporté au moyen d'un dispositif de va-et-vient placé en amont (10).

6. Procédé selon la revendication 1,
**caractérisé en ce**
**que** le non-tissé secondaire est déposé en continu en formant des méandres par un moyen de montée et de descente défini d'au moins une bande transport et est continué d'être transporté avec une vitesse de transport définie.

7. Procédé selon la revendication 2,
**caractérisé en ce**
**que** le non-tissé primaire (37) est amené au noyau d'enroulement (25) avec une vitesse de transport qui coïncide avec la vitesse circonférentielle du noyau d'enroulement (25).

8. Elément d'isolation de tuyau en fibres minérales constitué par un non-tissé en laine minérale (13) qui présente au moins deux couches parmi lesquelles une couche située à l'intérieur (3) présente une masse volumique apparente et donc une dureté plus faible qu'une couche située à l'extérieur (2).

9. Elément d'isolation de tuyau selon la revendication 8,
**caractérisé en ce**
**qu'**un contrecollage est placé sur le côté extérieur sur la couche extérieure (2).

10. Elément d'isolation de tuyau selon la revendication 9,
**caractérisé en ce**
**que** le contrecollage est constitué par une feuille de matière synthétique ou de métal.

11. Elément d'isolation de tuyau selon la revendication 8,
**caractérisé en ce**
**que** la couche située à l'extérieur (2) présente une masse volumique apparente supérieure de 50 à 100 % à la couche située à l'intérieur (3).

12. Elément d'isolation de tuyau selon la revendication 8,
**caractérisé en ce**
**que** l'élément d'isolation de tuyau (1) est configuré en deux parties et présente donc des surfaces de montant jointives, une bande collante étant placée dans la zone d'au moins une surface de montant.

13. Dispositif de fabrication de non-tissés en laine minérale en fibres minérales, en particulier pour éléments d'isolation de tuyaux, qui est comprimé dans une zone dans son sens longitudinal, avec un dispositif de transport pour le transport d'un non-tissé secondaire et avec un transporteur navette avec lequel un non-tissé primaire formé à partir de fibres minérales et de liants peut être déposé en formant des méandres sur le dispositif de transport, le transporteur navette étant constitué par deux bandes de transport orientées parallèlement entre lesquelles le non-tissé primaire est transporté,
**caractérisé en ce**
**que** le transporteur navette (10) présente un élément de transport qui comprime.

14. Dispositif selon la revendication 13,
**caractérisé en ce**
**que** l'élément de transport qui comprime est configuré comme bombage (48) d'au moins une, de préférence, des deux bandes de transport (42) du transporteur navette (10).

15. Dispositif selon la revendication 13,
**caractérisé en ce**
**que** l'élément de transport qui comprime est placé en aval des bandes de transport (42) du transporteur navette (10).

16. Dispositif selon la revendication 15,
**caractérisé en ce**
**que** l'élément de transport qui comprime qui est placé en aval est configuré comme une seconde paire de bandes de transport du transporteur navette (10) et présente au moins sur un côté un bombage (48).

17. Dispositif selon la revendication 16,
**caractérisé en ce**
**que** l'élément de transport qui comprime qui est placé en aval est placé pivotant dans le parcours de transport.

18. Dispositif selon la revendication 13,
**caractérisé en ce**
**que** l'élément de transport est configuré comme une paire de rouleaux qui présente deux rouleaux (49) qui sont placés respectivement au-dessous et/ou au-dessus de la bande de transport (42) du transporteur navette (10) et qui présentent une section de rouleau (50) dont le diamètre est plus grand que la distance entre les bandes de transport (42) du transporteur navette (10).

19. Dispositif selon la revendication 18,
**caractérisé en ce**
**que** chaque rouleau (49) présente plusieurs sections de rouleau (50) qui sont placées sur un axe.

20. Dispositif selon la revendication 19,
**caractérisé en ce**
**que** les sections de rouleau (50) sont reliées l'une à l'autre de préférence de manière crabotée.

21. Dispositif selon la revendication 19,
**caractérisé en ce**
**que** les sections de rouleau (50) sont placées interchangeables sur l'axe.

22. Dispositif selon la revendication 13,
**caractérisé en ce**
**que** l'élément de transport qui comprime est entraîné avec une vitesse qui coïncide avec la vitesse de transport du transporteur navette (10).
